# EUROPÄISCHE PATENTSCHRIFT

(11) **EP 1 710 263 B1**
(45) Veröffentlichungstag und Bekanntmachung des Hinweises auf die Patenterteilung: **17.09.2008**
(21) Anmeldenummer: 06111565.5
(22) Anmeldetag: 22.03.2006
(51) Int. Cl.: C08G 18/69, C08G 18/10

(54) **Polyurethangummi hergestellt aus einem isocyanat terminierten Prepolymeren enthaltend Polydienole**
Polyurethane rubber prepared from an isocyanate terminated Prepolymer containing polydiene polyols
Caoutchouc de polyuréthanne préparé d'un prépolymère avec terminaison isocyanate et contenant des polydiènes polyols

(30) Priorität: 05.04.2005 DE 102005015635
(43) Veröffentlichungstag der Anmeldung: 11.10.2006
(73) Patentinhaber: BASF SE, 67056 Ludwigshafen (DE)
(72) Erfinder: Reese, Hans-Jürgen, 49401, Damme (DE); Pohl, Wolfgang, 80797, München (DE); Lukat, Gunther, 86899, Landsberg (DE); Fritz, Ralf, 49143, Bissendorf-Schledehausen (DE)

(56) Entgegenhaltungen:
- EP-A- 0 414 375
- EP-A- 0 829 497
- WO-A-01/48046
- WO-A-98/56841

## Beschreibung

Die Erfindung betrifft einen Polyurethangummi, sowie ein Verfahren zu dessen Herstellung und dessen Verwendung als Klebstoff oder Laufrolle. Ferner betrifft die Erfindung ein Isocyanatprepolymer zur Herstellung eines Polyurethangummis.

Es sind im Stand der Technik verschiedenste elastomere Werkstoffe bekannt, wie beispielsweise Gummi. Diese Werkstoffe werden in unterschiedlichen Anwendungsgebieten eingesetzt. Es hat sich jedoch gezeigt, dass die bekannten elastomeren Werkstoffe für einige Anwendungen, z.B. für maritime Anwendungen wie das Beschichten von Holz, nicht geeignet sind, das sowohl die physikalischen Eigenschaften der Elastomere als auch die Hydrolyse- und Chemikalienbeständigkeit der Elastomere nicht vorteilhaft sind.

Aufgabe der Erfindung war es, einen Werkstoff (beziehungsweise ein Reaktionsgemisch) bereit zu stellen, dass zum einen eine vorteilhafte Klebwirkung und zum anderen eine vorteilhafte Chemikalien- sowie Hydrolysebeständigkeit aufweist.

Aufgabe der Erfindung war es zudem, einen Werkstoff bereit zu stellen, der eine vorteilhafte Elastizität, insbesondere eine erhöhte Elastizität, gegenüber klassischem Gummi auf Basis von reinem Polybutadien aufweist. Ferner war es Aufgabe der Erfindung, einen Werkstoff bereit zu stellen, der verbesserten Festigkeits- und Dehneigenschaften gegenüber klassischem Gummi auf Basis von reinem Polybutadien aufweist.

Die Aufgaben konnten durch die Einbringung von Polydienstrukturen, insbesondere Polybutadienstrukturen in Polyurethanwerkstoffen gelöst werden.

Gegenstand der Erfindung ist ein Verfahren zur Herstellung eines Polyurethangummi, erhältlich durch Umsetzung von
(a) Isocyanatprepolymeren, erhältlich durch Umsetzung von
   (a-1) Isocyanaten mit
   (a-2) Polydienol, mit
(b) Verbindungen mit gegenüber Isocyanaten reaktiven Gruppen, enthaltend Polydienol
wobei der Anteil an Polydienol, welcher der Umsetzung der Komponenten (a) und (b) zugegeben wird, mehr als 50 Gew.-%, bezogen auf das Gesamtgewicht der Komponenten (a) und (b), beträgt.

Unter Polyurethangummi wird ein Mischpolymer verstanden, das sowohl Urethangruppen als auch Polydiengruppen, bevorzugt Polybutadiengruppen, aufweist.

Der erfindungsgemäße Polyurethangummi ist erhältlich durch Reaktion eines 2-Komponenten-Polyurethansystems enthaltend ein Polyisocyanatprepolymer (a) und eine Polyolkomponente (b).

Unter "Polyurethansystem" wird im Rahmen dieser Erfindung ein flüssiges System verstanden, dass die vorstehend genannten Komponenten (a) und (b) enthält, und das nach Vermischen der Komponenten (a) und (b) in ein Formwerkzeug oder auf eine Oberfläche gegossen oder gesprüht werden kann und anschließend (bevorzugt ohne äußerliche Druckanwendung) härtet.

Nach dem Aushärten des erfindungsgemäßen Polyurethansystems liegt bevorzugt ein kompakter Polyurethangummi vor. Unter kompaktem Polyurethangummi werden im Rahmen dieser Erfindung Polyurethane verstanden, die ohne Zusatz von Treibmitteln hergestellt wurden. Gegebenenfalls können die verwendeten Verbindungen mit gegenüber Isocyanat reaktiven Gruppen (Komponente b) jedoch geringe Anteile an Restwasser enthalten. Bevorzugt ist der Restwassergehalt unter 1 Gew.-%, besonders bevorzugt unter 0,3 Gew.-%, bezogen auf das Gesamtgewicht der eingesetzten Komponente (b).

Die erfindungsgemäßen, ausgehärteten Polyurethangummis weisen im allgemeinen eine Dichte von 0,8 g/l bis 1,3 g/l, bevorzugt von 0,9 g/l bis 1,1 g/l. auf.

In der Umsetzung zum erfindungsgemäßen Polyurethangummi enthält die Komponente (a) Polydienol, insbesondere Polybutadienol. Ferner kann gegebenenfalls auch die Komponente (b) Polydienol, insbesondere Polybutadienol enthalten.

Im erfindungsgemäßen Verfahren zur Herstellung eines Polyurethangummi beträgt der Anteil an Polydienol, insbesondere der Anteil an Polybutadienol, welcher der Umsetzung der Komponenten (a) und (b) zugegeben wird, mehr als 50 Gewichtsprozent (Gew.-%), besonders bevorzugt 60 bis 90 Gew.-% bezogen auf das Gesamtgewicht der Komponenten (a) und (b).

In der Komponente (b) ist Polydienol enthalten. Der Anteil an Polydienol, insbesondere Polybutadienol, welcher der Umsetzung der Komponenten (a) und (b) zugegeben wird, beträgt 50 bis 85 Gew.-%, insbesondere 60 bis 80 Gew.-%, bezogen auf das Gesamtgewicht der Komponenten (a) und (b).

Zur Berechnung des Anteils an Polydienol, insbesondere Polybutadienol, welcher der Umsetzung der Komponenten (a) und (b) zugegeben wird, wird zunächst das Gewicht der Komponenten (a) und (b) ermittelt.

Das Gewicht der Komponente (a) ist das Gesamtgewicht des Isocyanatprepolymers und ergibt sich aus den addierten Gewichten der Bestandteile (a-1) und (a-2). Das Gewicht der Komponente (b) ist das Gesamtgewicht aller Verbindungen, die gegenüber Isocyanaten reaktive Gruppen aufweisen.

Das Gewicht der Komponente (b) ergibt sich somit bevorzugt aus den addierten Gewichten der Bestandteile (b-1), (b-2), (b-3), (b-4) und/oder (b-5). Ferner können andere Stoffe, die der Umsetzung aus (a) und (b) zugegeben werden, wie beispielsweise Katalysatoren, zum Gewicht der Komponente (b) beitragen, und zwar dann, wenn sie gegenüber lsocyanaten reaktive Gruppen aufweisen. Ein Beispiel hierfür sind die im Fachgebiet bekannten "einbaubaren Katalysatoren". Hingegen zählen im Fachgebiet bekannte Hilfs- und Zusatzstoffe, wie beispielsweise Füllstoffe, UV-Inhibitoren und dergleichen nicht zum Gewicht der Komponente (b) hinzu, wenn sie keine Gruppen aufweisen, die gegenüber Isocyanaten reaktiv sind.

Als Komponente (a) enthalten die erfindungsgemäßen Systeme Polyisocyanatprepolymere. Diese Polyisocyanatprepolymere sind erhältlich, indem Polyisocyanate (a-1), mit Polydienolen (a-2) zum Prepolymer umgesetzt werden. Die Umsetzung erfolgt beispielsweise bei Temperaturen von 30 bis 100°C, bevorzugt bei 50 bis 80°C. Das Verhältnis Isocyanat- zu OH-Gruppen wird hierbei durch Einsatz entsprechender Mengen der Komponenten (a-1) und (a-2) so gewählt, dass der NCO-Gehalt des Prepolymeren 3 bis 20 Gew.-%, vorzugsweise 5 bis 17 Gew.-%, besonders bevorzugt 8 bis 13 Gew.-% beträgt. Um Nebenreaktionen durch Luftsauerstoff auszuschließen, kann die Umsetzung unter Inertgas, vorzugsweise Stickstoff, durchgeführt werden.

Als Polyisocyanate (a-1) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Es ist sehr bevorzugt, dass es sich bei den Polyisocyanaten um Diisocyanate handelt. Besonders bevorzugt wird 4,4'-MDI verwendet.

Die Isocyanate können auch modifiziert sein, beispielsweise durch Einbau von Uretdion-, Carbamat-, Isocyanurat-, Carbodiimid- und/oder Allophanatgruppen.

Zur Herstellung des Isocyanatprepolymers (a) werden die Polyisocyanate (a-1) mit Polydienolen (a-2) umgesetzt. Bei der Komponente (a-2) handelt es sich um Polymere aus konjugierten Dienen, die mindestens eine (bevorzugt endständige) Hydroxylgruppe aufweisen. Polydienole (a-2) sind allgemein bekannt und beispielsweise in US 4,039,593 beschrieben.

In einer bevorzugten Ausführungsform weist die Komponente (a-2) eine OH-Funktionalität von 1,5 bis 3, mehr bevorzugt von 2,0 bis 2,6, auf. Die OH-Funktionalität gibt die Anzahl der tatsächlich vorhandenen OH-Gruppen pro Polymerdienmolekül an.

In einer bevorzugten Ausführungsform weist die Komponente (a-2) ein zahlenmittleres Molekulargewicht von 500 bis 6000 g/mol, bevorzugt von 1000 bis 5000 g/mol, mehr bevorzugt von 1500 bis 4000 g/mol, insbesondere von mehr als 2000 bis 3500 g/mol auf.

In einer erfindungsgemäßen Ausführungsform wird ein Polydienol (a-2) gemäß allgemeiner Formel (1) verwendet:

HO-A-OH (1)

wobei A ein Homopolymer auf Basis eines konjugierten Diolefin-Monomers oder ein Copolymer auf Basis von zwei oder mehrer Diolefin-Monomere ist.

Geeignete Diolefin-Monomere sind die 1,3-Diolefine, insbesondere das 1,3-Butadien sowie das 2-Methyl-1,3-Butadien. Bevorzugt verwendet wird 1,3-Butadien.

In einer bevorzugten Ausführungsform umfasst der Bestandteil "A" aus allgemeiner Formel (1) die Bausteine A1, A2 und/oder A3. Die Bausteine A1, A2 und A3 bilden sich hierbei durch Polymerisation von 1,3-Butadien.

Bei dem Baustein A1 handelt es sich um ein cis-Isomer mit folgender Struktur: 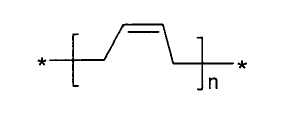 wobei n gleich 1 ist.

Bei dem Baustein A2 handelt es sich um ein trans-Isomer mit folgender Struktur: 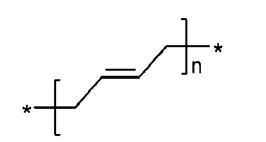 wobei n gleich 1 ist.

Bei dem Baustein A3 handelt es sich um ein Vinyl-Isomer mit folgender Struktur: 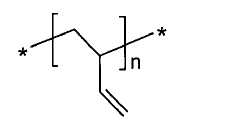 wobei n gleich 1 ist.

Die Sterne (*) symbolisieren in den vorstehenden Strukturen die Anknüpfungspunkte zu einem weiteren Baustein (ausgewählt aus A1, A2 und/oder A3) oder zu einer OH-Gruppe.

Die Bausteine A1, A2 und A3 können im Polymer HO-A-OH in Blockanordnung, in alternierender Anordnung und/oder in statistischer Verteilung vorliegen. Bevorzugt liegend die Bausteine A1, A2 und A3 in statistischer Verteilung vor.

Es ist bevorzugt, dass die Bausteine A1, A2 und A3 innerhalb des Bestandteils "A" in folgenden Mengen vorkommen:
Baustein A1 in einer Menge von 5 bis 30 Gew.-%, besonders bevorzugt von 15 bis 25 Gew.-%,
Baustein A2 in einer Menge von 40 bis 90 Gew.-%, besonders bevorzugt von 50 bis 70 Gew.-%,
Baustein A3 in einer von 5 bis 30 Gew.-%, besonders bevorzugt von 15 bis 25 Gew.-%,
jeweils bezogen auf das Gesamtgewicht des Bestandteils "A", der die Bausteine A1, A2 und/oder A3 enthält.

In einer bevorzugten Ausführungsform enthält der Bestandteil "A" der allgemeinen Formel (1) 10 bis 100, mehr bevorzugt 15 bis 85, besonders bevorzugt 25 bis 75 und insbesondere 35 bis 65 Bausteine, ausgewählt aus A1, A2 und/oder A3.

In einer bevorzugten Ausführungsform handelt es sich bei dem Polydienol (a-2) um ein Polybutadienol, insbesondere um ein Polybutadienol. Somit ist bevorzugt ein Gegenstand der Erfindung ein Polyurethangummi, erhältlich durch Umsetzung von
(a) Isocyanatprepolymeren, erhältlich durch Umsetzung von
   (a-1) Isocyanaten mit
   (a-2) Polydienol, mit
(b) Verbindungen mit gegenüber Isocyanaten reaktiven Gruppen, enthaltend Polydienol
wobei der Anteil an Polydienol, welcher der Umsetzung der Komponenten (a) und (b) zugegeben wird, mehr als 50 Gew.-%, bezogen auf das Gesamtgewicht der Komponenten (a) und (b), beträgt.

Die Komponente (a-2) wird in einer Menge von mehr als 50 bis 90 Gew.-%, mehr bevorzugt von 52 bis 80 Gew.-%, insbesondere von 55 bis 70 Gew.-%, bezogen auf das Gesamtgewicht der Komponenten (a) und (b) verwendet.

Somit sind ferner Gegenstand der Erfindung Isocyanatprepolymere (a), erhältlich durch Umsetzung von
(a-1) Isocyanaten mit
(a-2) Polydienol, bevorzugt Polybutadienol,
wobei die Menge an eingesetzten Polydienol (a-2) mehr als 50 Gew.-%, bezogen auf das Gesamtgewicht der Komponenten (a-1) und (a-2) beträgt.

Bevorzugt enthalten die erfindungsgemäßen Isocyanatprepolymere die Komponente (a-2) in einer Menge von mehr als 50 bis 90 Gew.-%, mehr bevorzugt von 52 bis 80 Gew.-%, insbesondere von 55 bis 70 Gew.-%, bezogen auf das Gesamtgewicht des Isocyanatprepolymers.

In einer bevorzugten Ausführungsform werden die Komponenten (a-1) und (a-2) und das Umsetzungsverhältnis der Komponenten so gewählt, dass das resultierende Isocyanatprepolymer eine Viskosität von 2000 bis 20000 mPas, mehr bevorzugt von 5000 bis 15000 mPas, insbesondere von 8000 bis 13000 mPas, gemessen bei 25°C nach DIN 53018, aufweist.

Als Verbindungen mit gegenüber Isocyanaten reaktiven Wasserstoffatomen (Komponente b) kommen Verbindungen in Frage, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Je nach Wahl der Komponente (b) umfasst im Rahmen dieser Erfindung der Begriff Polyurethane allgemein Polyisocyanat-Polyadditionsprodukte, beispielsweise auch Polyharnstoffe.

In einer bevorzugten Ausführungsform enthält die Komponente (b) einen oder mehrere Bestandteile ausgewählt aus:
(b-1) Polyetherpolyol, das bevorzugt erhältlich ist durch Alkoxylierung eines di-, tri- oder tetrafunktionellen Startermoleküls und ein zahlenmittleres Molekulargewicht von mehr als 500 g/mol aufweist;
(b-2) Polytetrahydrofuran;
(b-3) Polyesterpolyol, das bevorzugt ein zahlenmittleres Molekulargewicht von mehr als 500 g/mol aufweist;
(b-4) Polydienol, insbesondere Polybutadienol, das ein zahlenmittleres Molekulargewicht von mehr als 500 g/mol aufweist; und/oder
(b-5) Kettenverlängerungsmittel.

Im allgemeinen sind Polyetherole und Polyesterole im Fachgebiet bekannt und beispielsweise in "Kunststoffhandbuch Polyurethane" Günter Oertel, Carl-Hanser-Verlag, 2. Auflage 1983, Kap. 3.1.1 beschrieben.

Falls Polyetheralkohole als (b-1) eingesetzt werden, so werden diese im allgemeinen nach bekannten Verfahren, beispielsweise durch anionische Polymerisation mit Alkalihydroxiden, als Katalysatoren und unter Zusatz eines Startermoleküls mehrere reaktive Wasserstoffatome gebunden enthält, aus einem oder mehreren Alkylenoxiden, ausgewählt aus Propylenoxid (PO) und Ethylenoxid (EO), hergestellt.

In einer bevorzugten Ausführungsform wird im Bestandteil (b-1) ein Polyetherol mit einem zahlenmittleren Molekulargewicht von mehr als 400 bis 5000 g/mol, bevorzugt von mehr als 500 bis 3000 g/mol, besonders bevorzugt von 1000 bis 2500 g/mol verwendet.

Die Komponenten (b-1) weist üblicherweise eine durchschnittliche Funktionalität von 1,9 bis 4, mehr bevorzugt von 2,0 bis 3, insbesondere von 2,1 bis 2,8 auf. Unter Funktionalität ist hierbei die "theoretische OH-Funktionalität" zu verstehen, die aus der Funktionalität der verwendeten Startermoleküle ergibt.

Der Bestandteil (b-1) wird üblicherweise in einer Menge von 20 bis 80 Gew.-%, bevorzugt von 30 bis 70 Gew.-%, bezogen auf das Gesamtgewicht der Komponente (b), eingesetzt.

Als Bestandteil (b-2) werden bevorzugt Polyetherole verwendet, die durch ringöffnende Polymerisation von Tetrahydrofuran erhalten werden. Diese Polytetrahydrofurane weisen bevorzugt eine Funktionalität von etwa 2 auf. Ferner weisen sie bevorzugt ein zahlenmittleres Molekulargewicht von 500 bis 4000 g/mol, bevorzugt von 700 bis 3000 g/mol, besonders bevorzugt von 900 bis 2500 g/mol auf. Polytetrahydrofuran (= PTHF) ist im Fachgebiet auch unter den Bezeichnungen Tetramethylenglykol (= PTMG), Polytetramethylenglykolether (= PTMEG) oder Polytetramethylenoxide (= PTMO) bekannt.

Der Bestandteil (b-2) wird üblicherweise in einer Menge von 20 bis 80 Gew.-%, bevorzugt von 30 bis 70 Gew.-%, bezogen auf das Gesamtgewicht der Komponente (b), eingesetzt.

Falls Polyesteralkohole als Bestandteil (b-3) eingesetzt werden, dann werden diese üblicherweise durch Kondensation von mehrfunktionellen Alkoholen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

In einer bevorzugten Ausführungsform wird im Bestandteil (b-3) ein Polyesterol mit einem zahlenmittleren Molekulargewicht von mehr als 400 bis 5000 g/mol, bevorzugt von mehr als 500 bis 3000 g/mol, besonders bevorzugt von 1000 bis 2500 g/mol verwendet.

Der Bestandteil (b-3) wird üblicherweise in einer Menge von 20 bis 80 Gew.-%, bevorzugt von 30 bis 70 Gew.-%, bezogen auf das Gesamtgewicht der Komponente (b), eingesetzt.

Als Bestandteil (b-4) werden Polydienol, insbesondere Polybutadienol, das bevorzugt ein zahlenmittleres Molekulargewicht von mehr als 500 g/mol aufweist, verwendet. Für den Bestandteil (b-4) finden alle vorstehend gemachten Ausführungen zu dem Bestandteil (a-2) Anwendung.

Der Bestandteil (b-4) wird üblicherweise in einer Menge von 20 bis 80 Gew.-%, bevorzugt von 30 bis 70 Gew.-%, bezogen auf das Gesamtgewicht der Komponente (b), eingesetzt.

Als Bestandteil (b-5) können die Verbindungen mit gegenüber Isocyanaten reaktiven Wasserstoffatomen (b) Kettenverlängerungsmittel enthalten. Geeignete Kettenverlängerungsmittel sind im Stand der Technik bekannt. Bevorzugt werden 2- funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Dipropylenglykol, Tripropylenglycol. Bevorzugt wird 1,4-Butandiol verwendet.

Das Kettenverlängerungsmittel wird üblicherweise in einer Menge von 5 bis 20 Gew.-%, bevorzugt von 7 bis 16 Gew.-%, besonders bevorzugt von 9 bis 15 Gew. %, bezogen auf das Gesamtgewicht der Komponente (b) verwendet.

Die erfindungsgemäßen Polyurethangummis weisen im allgemeinen eine Härte von Shore A, (gemessen nach DIN 53505) von 20 bis 90, bevorzugt von Shore A 50 bis 75 auf. Die bevorzugte Härte kann beispielsweise durch geeignete Wahl des NCO-Gehaltes des Polyisocyanatprepolymers erreicht werden.

Die Umsetzung der Komponenten (a) und (b) erfolgt in einer bevorzugten Ausführungsform in Gegenwart eines Katalysators (c). Als Katalysatoren werden optional die üblichen und bekannten Polyurethanbildungskatalysatoren eingesetzt, beispielsweise organische Zinnverbindungen, wie Zinndiacetat, Zinndioctoat, Dibutylzinndilaurat, und/oder stark basische Amine wie Diazabicyclooctan, Triethylamin, oder vorzugsweise Triethylendiamin oder Bis(N,N-Dimethylaminoethyl)ether.

Der Bestandteil (c) wird üblicherweise in einer Menge von 0,5 bis 5 Gew.-%, bevorzugt von 1 bis 3 Gew.-%, bezogen auf das Gesamtgewicht der Komponente (b) verwendet.

Die Umsetzung der Komponenten (a) und (b) erfolgt in einer bevorzugten Ausführungsform in Gegenwart eines Füllstoffs (d). Hierbei sind im allgemeinen die üblichen, auf dem Gebiet der Polyurethanchemie bekannten Füllstoffe geeignet. Beispiele für geeignete Füllstoffe sind Glasfasern, Mineralfasern, Naturfasern, wie beispielsweise Flachs, Jute oder Sisal, Glasflakes, Silikate wie Mica oder Glimmer, Salze, wie Kalziumcarbonat, Kreide oder Gips, handeln. Besonders bevorzugt wird Kaolin, insbesondere kalziniertes Kaolin als Füllstoff verwendet.

Der Bestandteil (d) wird üblicherweise in einer Menge von 5 bis 50 Gew.-%, bevorzugt von 10 bis 30 Gew.-%, bezogen auf das Gesamtgewicht der Komponente (b) verwendet.

Die Umsetzung der Komponenten (a) und (b) erfolgt gegebenenfalls in Anwesenheit von (e) Hilfs- und/oder Zusatzstoffen, wie z.B. Zellreglern, Trennmitteln, Pigmenten, Flammschutzmittel, oberflächenaktiven Verbindungen und/oder Stabilisatoren gegen oxidativen, thermischen, hydrolytischen oder mikrobiellen Abbau oder Alterung.

Die Komponenten (c), (d), und (e) können sowohl direkt der Umsetzung aus Isocyanatkomponente (a) und Polyolkomponente (b) zugegeben werden als auch einer der beiden Komponente (a) und/oder (b) vor der Umsetzung zugesetzt werden. Bevorzugt werden die Komponenten (c), (d), und (e) der Polyolkomponente (b) vor der Umsetzung zugesetzt.

Im erfindungsgemäßen Verfahren werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

Die Verfahrengemäss hergestellten Polyurethangummis sind für unterschiedliche Anwendungen geeignet. Bevorzugt finden sie Verwendung zur Herstellung von 2-Komponenten-Klebstoffe und Laufrollen. Beispiele für Laufrollen sind Inline-Skater-Rollen und Kofferrollen.

Gegenstand der Erfindung ist somit die Verwendung des erfindungsgemäßen Polyurethangummis zur Herstellung einer Laufrolle, insbesondere einer Inline-Skater-Rolle.

Ferner ist Gegenstand der Erfindung eine Laufrolle, aufgebaut aus
(i) einer Rollennabe und daran haftend angebracht
(ii) als Lauffläche einen erfindungsgemäßen Polyurethangummi.

Im allgemeinen werden im Rahmen dieser Erfindung als "Laufrolle" alle Rollen verstanden, die mittels der Rollennabe auf einer Achse angebracht werden können und dazu dienen, dass die Achse oder eine damit verbundene Vorrichtung durch Rollbewegen senkrecht zur Achse vorwärts bewegt werden kann. Beispiele für derartige Vorrichtungen sind Inline-Skater-Rollen und Kofferrollen.

In einer bevorzugten Ausführungsform beträgt der Außendurchmesser der Laufrolle 1 Zentimeter (cm) bis 15 cm, bevorzugt 3 cm bis 8 cm. Die Laufrolle weist bevorzugt eine Breite von 0,5 bis 5 cm, bevorzugt von 1 bis 3 cm auf. Es ist möglich, dass die Breite der Rolle, insbesondere die der Lauffläche (ii) nach außen hin sich verjüngt. In diesem Fall beziehen sich oben genannten Zahlenbereiche der Rolle auf die maximale Breite der Rollennabe (i).

Die Rollennabe (i) besteht im allgemeinen aus Kunststoff, bevorzugt einem duroplastischen Kunststoff, oder Metall, bevorzugt Aluminium oder Stahl. Sie weist in einer bevorzugten Ausführungsform einen Durchmesser von 0,5 bis 10 cm, bevorzugt von 1 bis 4 cm auf.

Die Lauffläche (ii) enthält den erfindungsgemäßen Polyurethangummi. Es gelten die vorstehend gemachten Erläuterungen zu den bevorzugten Ausführungsformen des erfindungsgemäßen Polyurethangummis.

In einer besonders bevorzugten Ausführungsform enthält die Lauffläche einen Polyurethangummi, der durch Umsetzung einer Polyolkomponenten (b) erhältlich ist, welche die Bestandteile Polytetrahydrofuran (b-2) und/oder Polybutadienol (b-4) enthält. Insbesondere wird hierbei entweder (b-2) oder (b-4) verwendet.

Es ist hierbei besonders bevorzugt, dass die Bestandteile (b-2) und/oder (b-4) in einer Menge von 40 bis 100 Gew.-%, insbesondere von 60 bis 90 Gew.-%, bezogen auf das Gesamtgewicht der Komponente (b) enthalten sind.

Schließlich ist Gegenstand der Erfindung die Verwendung des erfindungsgemäßen Polyurethangummis zur Herstellung eines 2-Komponenten-Klebstoffs. Der 2-Komponenten-Klebstoff wird bevorzugt zur Beschichtung oder Versiegelung von Substratschichten verwendet. Beispiele für geeignete Substratschichten sind Kunststoff, Metall und/oder Holz. Beispielsweise können als Substratschichten Schiffsplanken angesehen werden, insbesondere Schiffsplanken aus Holz.

Gegenstand der Erfindung ist somit weiterhin ein Verbundelement, aufgebaut aus
(i) einer Substratschicht, insbesondere einer Holzschicht, und daran haften angebracht
(ii) eine Schicht aus erfindungsgemäßen Polyurethangummi.

Insbesondere sind die erfindungsgemäßen Verbundelemente für maritime Anwendungen geeignet. Unter maritimer Anwendung ist zu verstehen, dass das erfindungsgemäße Verbundelement bei bestimmungsgemäßen Gebrauch zumindest zeitweise in Kontakt mit Meerwasser kommen kann.

In einer bevorzugten Ausführungsform ist das erfindungsgemäße Verbundelement daher aufgebaut aus
(i) einer Substratschicht, insbesondere einer Holzschicht, und daran haften angebracht
(ii) eine Schicht aus erfindungsgemäßen Polyurethangummi,
wobei die Schicht aus Polyurethangummi zumindest zeitweise in Kontakt mit Meerwasser kommt.

In einer besonders bevorzugten Ausführungsform enthält der 2-Komponenten-Klebstoff oder das erfindungsgemäße Verbundelement einen Polyurethangummi, der durch Umsetzung einer Polyolkomponenten (b) erhältlich ist, welche die Bestandteile Polyetherpolyol (b-1) oder Polyesterpolyol (b-3) enthält.

Es ist hierbei besonders bevorzugt, dass die Bestandteile (b-1) oder (b-3) in einer Menge von 40 bis 100 Gew.-%, insbesondere von 60 bis 90 Gew.-%, bezogen auf das Gesamtgewicht der Komponente (b) enthalten sind.

Die Erfindung soll durch nachstehende Beispiele veranschaulicht werden.

### Beispiele:

### 1. Herstellung eines 2-Komponenten-Klebstoffes (Vergleichsversuch)

### 1.1 Polyolkomponente

In einem geeigneten Mischbehälter wurden 747g eines Polyetherpolyols auf Basis Glyzerin/Propylenoxyd Molekulargewicht 6000g/Mol, 40g Butandiol1,4 , 40g Natriumalumosilikat (50%ig in Rizinusöl), 3g Diazobicyclooktan (33%ig in Dipropylenglykol), 150g eines kalzinierten Kaolins sowie 20g Bayflex® Schwarzpaste zu einer Polyolkomponente homogenisiert.

### 1.2 Isocyanatkomponente

In einem Laborreaktor wurden 340g 4,4'-Diphenylmethandiisocyanat in Schuppenform vorgelegt. Dazu wurden 60g carbodiimidmodifiziertes 4,4'-Diphenylmethandiisocyanat zudosiert und das Isocyanatgemisch aufgeschmolzen. Dem flüssigen Isocyanatgemisch wurden nachfolgend 600g OH-terminiertes Polybutadien mit einer OH-Zahl von 50 mgKOH/g langsam unter rühren zugegeben. Das Reaktionsgemisch wurde auf ca. 80°C erwärmt und durch entsprechende Reaktionsführung erfolgt bei dieser Temperatur innerhalb von ca. 90 min der Umsatz zur Isocyanatkomponente dem NCO-Prepolymer.

Das erhaltene Produkt wies folgende Eigenschaften auf:
Viskosität (20°C): 10000 mPas ; Isocyanatgehalt: 11 %NCO

### 1.3 Verarbeitung zum Klebstoff

Durch Vermischen von 200g Polyolkomponente (gemäß 1.1) mit 118g lsocyanatkomponente (gemäß 1.2) wurde ein Reaktionsgemisch hergestellt. Dieses flüssige Reaktionsgemisch mit einem 25,5%igen Anteil an Gummi-Strukturen im Polymeren wurde nachfolgend zum Verkleben von Holz verwendet. Hierzu wurden die für den Schiffsdecks-belag vorgesehenen Hölzer mit dem Klebstoffgemisch bestrichen und auf dem Untergrund fixiert.

Zur Beurteilung der Klebewirkung wurden Prüfhölzer miteinander verklebt und auf Scherung beansprucht. Es wurde eine Zugscherfestigkeit von 350 N/cm² ermittelt.

Zur Beurteilung der Hydrolysefestigkeit wurde das ausgehärtete Polymere Salzwasser ausgesetzt. Innerhalb einer Lagerzeit von 5 Tagen waren nur unwesentliche Änderungen der Härte (-1 °Sh A) sowie eine reversible Wasseraufnahme von nur 0,5 % festzustellen.

### 2. Zweikomponenten-Gießharzes zur Herstellung von PUR-Gummi-Formteilen (Vergleichsversuch)

### 2.1 Polyolkomponente

In einem geeigneten Mischbehälter wurden 918g Polytetrahydrofuran Molekulargewicht 2000 g/mol, 40g Butandiol1,4, 20g Natriumalumosilikat (50%ig in Rizinusöl), 2g Diazobicyclooktan (33%ig in Dipropylenglykol) sowie 20g Bayflex® Schwarzpaste zu einer Polyol-komponente homogenisiert.

### 2.2 Isocyanatkomponente

In einem Laborreaktor wurden 340g 4,4'-Diphenylmethandiisocyanat in Schuppenform vorgelegt. Dazu wurden60g carbodiimidmodifiziertes 4,4'-Diphenylmethandiisocyanat zudosiert und das Isocyanatgemisch aufgeschmolzen. Dem flüssigen lsocyanatgemisch wurden nachfolgend 600g OH-terminiertes Polybutadien mit einer OH-Zahl von 50mgKOH/g langsam unter rühren zugegeben. Das Reaktionsgemisch wurde auf ca. 80°C erwärmt und durch entsprechende Reaktionsführung erfolgte bei dieser Temperatur innerhalb von ca. 90 min der Umsatz zur Isocyanatkomponente dem NCO-Prepolymer.

Das erhaltene Produkt wies folgende Eigenschaften auf:
Viskosität (20°C): 10000 mPas ; Isocyanatgehalt: 11 %NCO

### 2.3 Verarbeitung zum "Gummi"-Formteil (z.B. eine Rolle)

Die zur Herstellung einer Rolle erforderliche Form insbesondere Metallform wurde auf ca. 60°C erwärmt. In die Metallform wurde die Rollennabe eingelegt. Die unter Punkt 2.1 bzw. 2.2 beschriebenen Komponenten wurden auf ca. 50°C erwärmt.
Die Komponenten wurden nachfolgend im Gewichtsverhältnis Polyol- zu Isocyanatkomponente gleich 100 zu 75 gemischt und das flüssige Reaktionsgemisch in die Metallform gegossen. Nach der Aushärtung und Entformung erhielt man eine hochelastische "Gummi"-Rolle mit einem Gummi-Anteil von ca. 26,2% bei einer Härte von 70°Shore A.

Die verbesserten Eigenschaften erkennt man beim Elastizitätsvergleich.

| | |
|---|---|
| Stoßelastizität gemäß Ausführungsbeispiel: | 74% |
| Stoßelastizität einer gleichharten Gummirolle: | 36% |

### 3. Zweikomponenten-Gießharzes zur Herstellung von PUR-vernetzten-Gummi (mit hohem Gummi-Anteil)- erfindungsgemäss

### 3.1 Polyolkomponente

In einem geeigneten Mischbehälter wurden 870g OH-terminiertes Polybutadien mit einer OH-Zahl von 50 mg KOH/g, 43g Butandiol1,4 , 65g eines Polyethers auf Basis Trimethylolpropan/Propylenoxyd OH-Zahl 875 mg KOH/g, 2g Diazobicyclooktan (33%ig in Dipropylen-glykol) sowie 20g Bayflex® Schwarzpaste zu einer Polyolkomponente homogenisiert.

### 3.2 Isocyanatkomponente

In einem Laborreaktor wurden 340g 4,4'-Diphenylmethandiisocyanat in Schuppenform vorgelegt. Dazu wurden 60g carbodiimidmodifiziertes 4,4'-Diphenylmethandiisocyanat zudosiert und das Isocyanatgemisch aufgeschmolzen. Dem flüssigen Isocyanatgemisch wurden nachfolgend 600g OH-terminiertes Polybutadien mit einer OH-Zahl von 50mgKOH/g langsam unter rühren zugegeben. Das Reaktionsgemisch wurde auf ca. 80°C erwärmt und durch entsprechende Reaktionsführung erfolgt bei dieser Temperatur innerhalb von ca. 90 min der Umsatz zur Isocyanatkomponente dem NCO-Prepolymer.

Das erhaltene Produkt wies folgende Eigenschaften auf:
Viskosität (20°C): 10000 mPas ; Isocyanatgehalt: 11%NCO

### 3.3 Verarbeitung zum "Gummi"-Formteil (z.B. eine Rolle)

Die zur Herstellung einer Rolle erforderliche Form insbesondere Metallform wurde auf ca. 60°C erwärmt. In die Metallform wurde die Rollennabe eingelegt. Die unter Beispiel 3.1 bzw. 3.2 beschriebenen Komponenten wurden auf ca. 50°C erwärmt. Die Komponenten wurden nachfolgend im Gewichtsverhältnis Polyol- zu Isocyanat-komponente gleich 100 zu 110 gemischt und das flüssige Reaktionsgemisch in die Metallform gegossen.

Nach der Aushärtung und Entformung erhielt man eine hochelastische "Gummi"-Rolle mit einem Gummi-Anteil von ca. 73,6% bei einer Härte von 72°Shore A.

Die verbesserten Eigenschaften erkennt man beim Elastizitätsvergleich.

| | |
|---|---|
| Stoßelastizität gemäß Ausführungsbeispiel: | 61% |
| Stoßelastizität einer gleichharten Gummirolle aus Polybutadien: | 36% |

## Patentansprüche

1. Verfahren zur Herstellung eines Polyurethangummis durch Umsetzung von
(a) Isocyanatprepolymeren, erhältlich durch Umsetzung von
(a-1) Isocyanaten mit
(a-2) Polydienol, mit
(b) Verbindungen mit gegenüber Isocyanaten reaktiven Gruppen, enthaltend Polydienol,
wobei der Anteil an Polydienol, welcher der Umsetzung der Komponenten (a) und (b) zugegeben wird, mehr als 50 Gew.-%, bezogen auf das Gesamtgewicht der Komponenten (a) und (b), beträgt.

2. Verfahren nach Anspruch 1, **dadurch gekennzeichnet, dass** das Polydienol (a-2) eine OH-Funktionalität von 2,0 bis 2,6 und/oder ein zahlenmittleres Molekulargewicht von mehr als 1000 g/mol bis 5000 g/mol aufweist

3. Verfahren nach Anspruch 1 oder 2, **dadurch gekennzeichnet, dass** der Anteil an Polybutadienstrukturen 60 Gew.-% bis 90 Gew.-%, bezogen auf das Gesamtgewicht der Komponenten (a) und (b), beträgt.

4. Verfahren i nach einem der Ansprüche 1 bis 3, **dadurch gekennzeichnet, dass** die Komponente (b) ein Polyetherpolyol (b-1) enthält, das durch Alkoxylierung ein di-, tri- oder tetrafunktionellen Startermoleküls erhältlich ist und ein zahlenmittleres Molekulargewicht von mehr als 500 g/mol aufweist.

5. Verfahren i nach einem der Ansprüche 1 bis 3, **dadurch gekennzeichnet, dass** die Komponente (b) ein Polytetrahydrofuran (b-2) enthält.

6. Verfahren nach einem der Ansprüche 1 bis 3, **dadurch gekennzeichnet, dass** die Komponente (b) ein Polyesterpolyol (b-3) enthält das ein zahlenmittleres Molekulargewicht von mehr als 500 g/mol aufweist.

7. Verfahren nach einem der Ansprüche 1 bis 3, **dadurch gekennzeichnet, dass** die Komponente (b) ein Polybutadienol (b-4) enthält, das ein zahlenmittleres Molekulargewicht von mehr als 500 g/mol aufweist.

8. Verfahren nach einem der Ansprüche 1 bis 7, **dadurch gekennzeichnet, dass** die Komponente (b) ein Kettenverlängerungsmittel (b-5) enthält.

9. Verwendung eines Polyurethangummis, hergestellt nach einem Verfahren gemäß Anspruch 4, 6 oder 7 als 2-Komponenten-Klebstoff.

10. Verwendung eines Polyurethangummis, hergestellt nach einem Verfahren gemäß Anspruch 5 oder 7 als Formteile, insbesondere Laufrollen.

11. Polyurethangummi, erhaltlich nach einem Verfahren gemäß Anspruch 1 bis 8, **dadurch gekennzeichnet, dass** als Isocyanate aromatische Isocyanate eingesetzt werden.

12. Laufrolle, aufgebaut aus
(i) einer Rollennabe und daran haftend angebracht
(ii) als Lauffläche ein Polyurethangummi gemäß Anspruch 11.

13. Verbundelement, aufgebaut aus
(i) einer Substratschicht, insbesondere einer Holzschicht, und daran haften angebracht
(ii) eine Schicht aus Polyurethangummi gemäß Anspruch 11.

## Claims

1. A process for production of a polyurethane rubber via reaction of
(a) isocyanate prepolymers, obtainable via reaction of
(a-1) isocyanates with
(a-2) polydienol, with
(b) compounds having groups reactive toward isocyanates, comprising polydienol,
where the proportion of polydienol added to the reaction of components (a) and (b) is more than 50% by weight, based on the total weight of components (a) and (b).

2. The process according to claim 1, wherein the OH functionality of the polydienol (a-2) is from 2.0 to 2.6 and/or its number-average molar mass is from more than 1000 g/mol to 5000 g/mol.

3. The process according to claim 1 or 2, wherein the proportion of polybutadiene structures is from 60% by weight to 90% by weight, based on the total weight of components (a) and (b).

4. The process according to any of claims 1 to 3, wherein component (b) comprises a polyether polyol (b-1) which is obtainable via alkoxylation of a di-, tri- or tetrafunctional starter molecule and which has a number-average molar mass of more than 500 g/mol.

5. The process according to any of claims 1 to 3, wherein component (b) comprises a polytetrahydrofuran (b-2).

6. The process according to any of claims to 1 to 3, wherein component (b) comprises a polyester polyol (b-3) which has a number-average molar mass of more than 500 g/mol.

7. The process according to any of claims 1 to 3, wherein component (b) comprises a polybutadienol (b-4) which has a number-average molar moss of more than 500 g/mol.

8. The process according to any of claims 1 to 7, wherein component (b) comprises a chain extender (b-5).

9. The use of a polyurethane rubber, produced according to a process according to claim 4, 6, or 7 as a 2-component adhesive.

10. The use of a polyurethane rubber, produced according to a process according to claim 5 or 7 as moldings, particular traveling rollers.

11. A polyurethane rubber, obtainable by a process according to any of claims 1 to 8, the isocyanates used comprise aromatic isocyanates.

12. A traveling roller, composed of
(i) a roller hub and, adhering thereto
(ii) as traveling surface, a polyurethane rubber according to claim 11.

13. A composite element, composed of
(i) a substrate layer, in particular a wood layer, and, adhering thereto
(ii) a layer composed of polyurethane rubber according to claim 11.

## Revendications

1. Procédé pour la préparation d'un caoutchouc polyuréthanne par mise en réaction
(a) de prépolymères d'isocyanate, pouvant être obtenus par mise en réaction
(a-1) d'isocyanates avec
(a-2) un polydiénol, avec
(b) des composés comportant des groupes réactifs vis-à-vis d'isocyanates, contenant un polydiénol,
la proportion du polydiénol qui est ajouté dans la réaction des composants (a) et (b) étant de plus de 50 % en poids par rapport au poids total des composants (a) et (b).

2. Procédé selon la revendication 1, **caractérisé en ce que** le polydiénol (a-2) présente une fonctionnalité OH de 2,0 à 2,6 et/ou une masse moléculaire moyenne en nombre de plus de 1 000 g/mole à 5 000 g/mole.

3. Procédé selon la revendication 1 ou 2, **caractérisé en ce que** la proportion de structures polybutadiène va de 60 % en poids à 90 % en poids, par rapport au poids total des composants (a) et (b).

4. Procédé selon l'une quelconque des revendications 1 à 3, **caractérisé en ce que** le composant (b) contient un polyétherpolyol (b-1) qui peut être obtenu par alcoxylation d'une molécule di-, tri-ou tétrafonctionnelle de départ et présente une masse moléculaire moyenne en nombre de plus de 500 g/mole.

5. Procédé selon l'une quelconque des revendications 1 à 3, **caractérisé en ce que** le composant (b) contient un polytétrahydrofuranne (b-2).

6. Procédé selon l'une quelconque des revendications 1 à 3, **caractérisé en ce que** le composant (b) contient un polyesterpolyol (b-3) qui présente une masse moléculaire moyenne en nombre de plus de 500 g/mole.

7. Procédé selon l'une quelconque des revendications 1 à 3, **caractérisé en ce que** le composant (b) contient un polybutadiénol (b-4) qui présente une masse moléculaire moyenne en nombre de plus de 500 g/mole.

8. Procédé selon l'une quelconque des revendications 1 à 7, **caractérisé en ce que** le composant (b) contient en prolongateur de chaîne (b-5).

9. Utilisation d'un caoutchouc polyuréthanne préparé conformément à un procédé selon la revendication 4, 6 ou 7, en tant qu'adhésif bicomposant.

10. Utilisation d'un caoutchouc polyuréthanne préparé conformément à un procédé selon la revendication 5 ou 7, en tant que pièces moulées, en particulier roulettes.

11. Caoutchouc polyuréthanne, pouvant être obtenu conformément à un procédé selon l'une quelconque des revendications 1 à 8, **caractérisé en ce qu'**on utilise en tant qu'isocyanates des isocyanates aromatiques.

12. Roulette, constituée de
(i) un moyeu de roulette et, appliqué sur celui-ci en adhérant
(ii) en tant que surface de roulement, un caoutchouc polyuréthanne selon la revendication 11.

13. Elément composite, constitué de
(i) une couche de support, en particulier une couche de bois, et appliqué sur celle-ci en adhérant
(ii) une couche de caoutchouc polyuréthanne selon la revendication 11.
